# EUROPEAN PATENT APPLICATION

(11) **EP 3 106 715 A1**
(43) Date of publication of application: **21.12.2016**
(21) Application number: 15172959.7
(22) Date of filing: 19.06.2015
(51) Int. Cl.: F16H 59/02, F16H 59/10, F16H 61/18, F16H 61/24

(54) **MONOSTABLE SHIFT BY WIRE GEARSHIFT DEVICE**

(71) Applicant: Fico Triad, S.A., 08028 Barcelona (ES)
(72) Inventor: DOMINGUIS BOTELLA, Marc, 08790 GELIDA (ES)
(74) Representative: ZBM Patents - Zea, Barlocci & Markvardsen

(57) **Abstract**

Monostable shift by wire gearshift device (200), comprising a selector (220) movable along at least first and second shifting paths (P1, P2) for selecting gearshift positions, the first shifting path (P1) extending from an unstable reverse gearshift position (R) to an unstable drive gearshift position (D), a stable gearshift position (H) being defined into which the selector (220) automatically returns after it has been moved for selecting a gearshift position, the second shifting path (P2) extending from the stable gearshift position (H) to an unstable neutral gearshift position (N), where the unstable neutral gearshift position (N) is defined located out of said first shifting path (P1), and where the second shifting path (P2) comprises at least a first travel (R1) and a second travel (R2) that are different from each other such that the user is capable of recognizing the one along which the selector (220) is being moved.

## Description

The present disclosure relates to monostable shift by wire gearshift devices for motor vehicles.

### BACKGROUND

Gearshift devices for motor vehicles with automatic or automated manual transmission typically include a pattern assembly where a number of gearshift positions are defined, such as, for example a parking gearshift position P for engaging the parking brake or locking the transmission in position, a reverse gearshift position R for engaging a reverse gear, a neutral gearshift position N for interrupting the torque from the transmission to the wheels while the engine is running, and a drive gearshift position D for engaging a forward gear. Other gearshift positions also exist.

In monostable shift by wire gearshift devices for motor vehicles known in the art, a stable gearshift position is defined into which a selector automatically returns after it has been moved by the user for selecting a given gearshift position. When a gearshift position has been selected, a gearshift signal is sent to a control unit to drive the vehicle transmission accordingly.

Document EP1432934 discloses a monostable automatic shifting device whose selector can be moved from a stable gearshift position into at least three directions for selecting a gearshift position. In this shifting device, the neutral position N is selected from the stable gearshift position along one direction while the reverse gearshift position R or the drive gearshift position D is selected from the neutral gearshift position N in another, different direction that is not the opposite direction.

While such gearshift devices usually provide comfortable driving to the user, they share a disadvantage that the user may inadvertently put the selector into a wrong gearshift position. For example, a neutral gearshift position may be wrongly selected causing torque transmission to the wheels to be interrupted while the vehicle is running, when the driver really wanted to select any other different gearshift position. This may result in an unsafe situation.

There is still a need for a monostable shift by wire gearshift device in which an intended gearshift position can be unmistakeably selected by the driver reducing or even eliminating the possibilities of inadvertently selecting a wrong or undesired gearshift position.

### SUMMARY

A monostable shift by wire gearshift device is disclosed herein which has been shown to avoid the above disadvantages through a simple configuration.

The present gearshift device includes a selector that is movable along at least a first shifting path and a second shifting path for selecting a gearshift position, such as any of the above mentioned parking P, reverse R, neutral N or drive D and other gearshift positions. Thus, the first and second shifting paths define a gearshift pattern.

The first shifting path of the present gearshift device extends from the reverse gearshift position R to the drive gearshift position D. The first shifting path may be linear; more specifically, the first shifting path may be defined by a line extending from the reverse gearshift position R to the drive gearshift position D.

The present gearshift device is of the monostable shifting type. For this reason, a stable gearshift position, usually referred to as idle or home gearshift position, is defined into which the selector automatically returns after it has been moved for selecting a desired gearshift position. The remaining gearshift positions are unstable gearshift positions. As used herein, unstable refers to a gearshift position in which once it has been selected by the selector, release of the selector causes its return to the home gearshift position. Thus the selector remains in the selected gearshift position only as long as it is held there.

In the pattern of the present gearshift device, the neutral gearshift position N is advantageously located out of the first shifting path between the reverse gearshift position R and the drive gearshift position D. Such strategic location of the neutral gearshift position N prevents an accidental selection thereof when moving the selector along the first shifting path between reverse and drive gearshift positions R, D. This allows risks during driving to be reduced or even eliminated. This is a very important feature since in current gearshift devices specific vehicle software may be capable of distinguishing if the user wants to select a gearshift position depending on the time the user maintains the selector at a given gearshift position. Therefore, if the selector is at the neutral gearshift position N for too long, this could be erroneously interpreted by the vehicle software as the user wanted to select the neutral gearshift position N while the intention, in fact, was to select the R or D gearshift position. Thus, with the present gearshift device, even if the user remains too much time between the reverse gearshift position R and the drive gearshift position D when trying to select the R or D gearshift position before reaching any of them, the neutral gearshift position N will not be selected and, therefore, the vehicle will be prevented from running freely without motor retention, thus improving safety. The user can only select the neutral gearshift position N if the selector is operated to the unique neutral gearshift position N out of the first shifting path, between the reverse gearshift position R and the drive gearshift position D.

The second shifting path of the present gearshift device extends from the stable gearshift position to the neutral gearshift position N. The second shifting path may be linear; more specifically, the second shifting path may be defined by a line extending from the stable gearshift position to the neutral gearshift position N. The second shifting path comprises at least a first travel and a second travel. The first travel of the second shifting path may be defined from the stable gearshift position to an intersection point between the second shifting path and the first shifting path. The second travel of the second shifting path may be defined from said intersection point and the neutral gearshift position N. Both the first and the second travel may be defined by lines.

The first and second travels are different from each other such that the user is capable of recognizing the travel along which the selector is being moved. For example, the force required for moving the selector along the first travel of the second shifting path may be different, greater or lower, for example, from that required for moving the selector along the second travel of the second shifting path. Other features could be used for distinguishing the first and second travels such that the user knows whether the selector is being moved or not into the neutral gearshift position N.

In further examples of the present gearshift device, an absolute continuous sensor device may be provided for detecting the position of the selector. Such absolute continuous sensor device may be configured in a way that an area is defined around at least each selectable gearshift position in which the selector can be moved such that no other different gearshift position is selected. The areas of the selectable gearshift positions may be defined such that, as the selector is moved from one gearshift position to a different gearshift position, a gearshift signal is sent to a control unit to drive a vehicle transmission accordingly.

In all of the examples of the gearshift device described above where at least a first shifting path and a second shifting path is defined, the gearshift device may be configured such that the selector can be moved along the first and second shifting paths for selecting a gearshift position according to 2D or 3D movements. In one example, the selector (selector lever) could be moved up or down for selecting a gearshift position. In further examples, the neutral gearshift position N could be selected by pushing or pulling vertically the selector or a part thereof, such as for example a selector lever knob. Also in this specific case, the neutral gearshift position N is again located out of the first shifting path between the reverse gearshift position R and the drive gearshift position D. Thus, the movement of the selector for selecting the neutral gearshift position N is advantageously independent of the selection of the R and D gearshift positions. Other 2D or 3D movements are also possible depending on the particular configuration of the pattern of the shift by wire gearshift device.

Additional objects, advantages and features of examples of the present monostable shift by wire gearshift device will become apparent to those skilled in the art upon examination of the description, or may be learned by practice thereof.

### BRIEF DESCRIPTION OF THE DRAWINGS

Particular embodiments of the present monostable shift by wire gearshift device will be described in the following by way of non-limiting examples, with reference to the appended drawings.

In the drawings:
Figure 1 is a sectional view of one example of the present monostable shift by wire gearshift device;
Figure 2 is an elevational view of the shift by wire gearshift device shown in figure 1;
Figure 3 is a perspective view of one specific configuration of a pattern of the shift by wire gearshift device shown in figures 1-2;
Figure 4 diagrammatically shows one example of a pattern of the present monostable shift by wire gearshift device;
Figure 5 diagrammatically shows a further example of a pattern of the present monostable shift by wire gearshift device; and
Figure 6 is a graph showing areas defined around each selectable gearshift position in which the selector can be moved such that no other different gearshift position is selected;

### DETAILED DESCRIPTION OF EXAMPLES

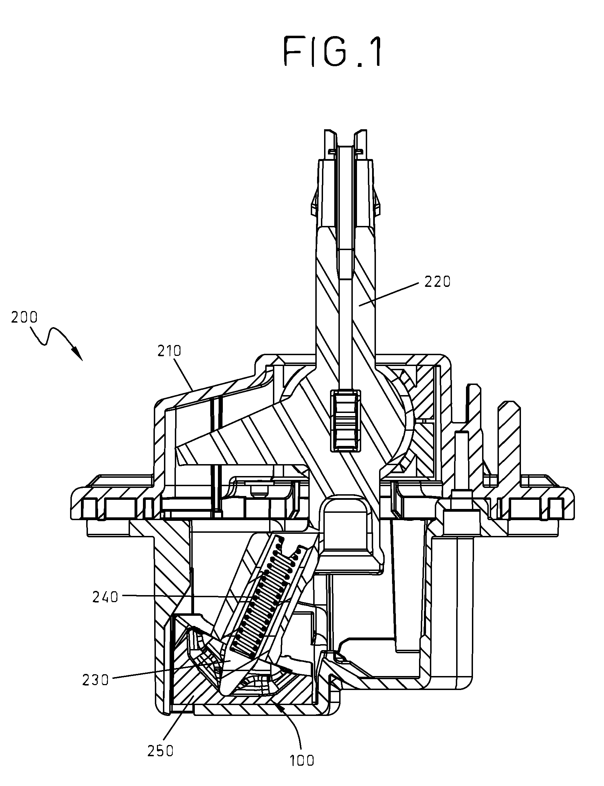

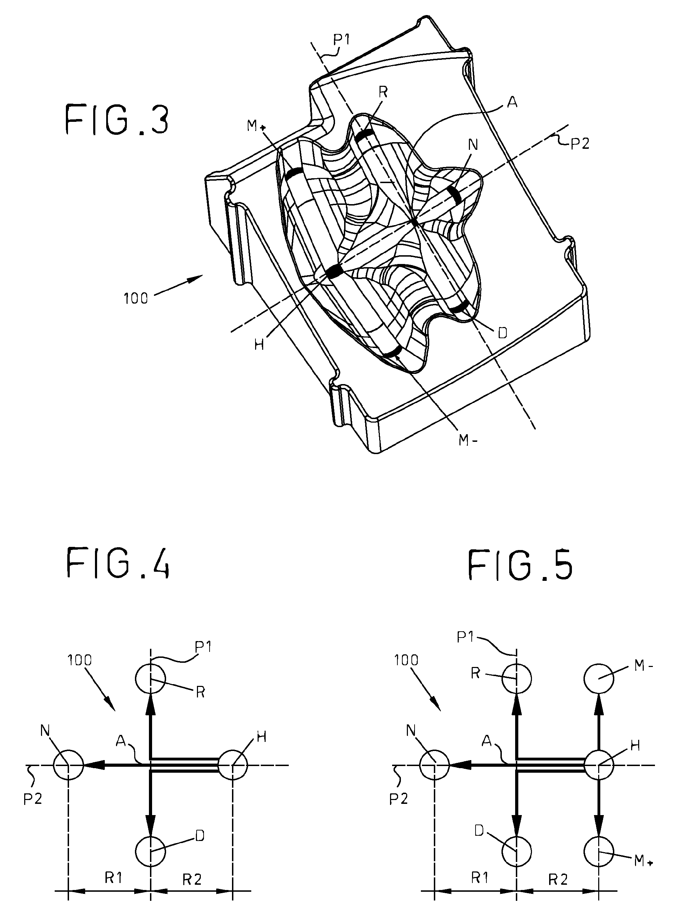

Figure 1 shows a monostable shift by wire gearshift device 200 for motor vehicles with automatic or automated manual transmission. The monostable shift by wire gearshift device 200 is movable along a gearshift pattern 100 such as the one shown in figures 3 to 5.

The monostable shift by wire gearshift device 200 comprises a main housing 210 for receiving the selector 220 for controlling the motor vehicle transmission. The selector 220 has a lower plunger 230 urged by a spring 240 such that it is always in contact on a contoured surface 250 that is formed at the lower inner portion of the main housing 210. The contoured surface 250 in the example shown in figure 3 is a 3D, non-flat irregular surface on which the gearshift pattern 100 is formed such that the lower plunger 230 follows it. This provides the user with haptic information relating to shifting operation, i.e. shifting feeling, as the selector 220 is operated by the user.

The gearshift pattern 100 of the present monostable shift by wire gearshift device 200 is configured for defining at least a first shifting path P1 (vertical line in figures 4-5 of the drawings) and a second shifting path P2 (horizontal line in figures 4-5 of the drawings) along which a selector 220 of the monostable shift by wire gearshift device 200 can be moved for selecting a gearshift position. The selector 220 may be for example a standard selector lever.

The shifting paths P1, P2 are diagrammatically depicted in figures 4 and 5 as being linear. However, other different configurations for the shifting paths P1, P2 are not ruled out. For example, any one of the first and the second shifting paths P1, P2 could be formed of different line segments or even they could be formed of at least one curved segment or a combination of the above.

As shown in figures 4, 5 and 6, examples of gearshift positions that can be selected for controlling the vehicle transmission by moving the selector 220 along at least the first and second shifting paths P1, P2 may be:
- parking gearshift position P for engaging the parking brake or locking the vehicle transmission;
- reverse gearshift position R for engaging a reverse gear;
- neutral gearshift position N for interrupting the torque from the transmission to the wheels while the engine is running;
- drive gearshift position D for engaging a forward gear; and
- manual shifting mode M+, M- for manual gear shifting.

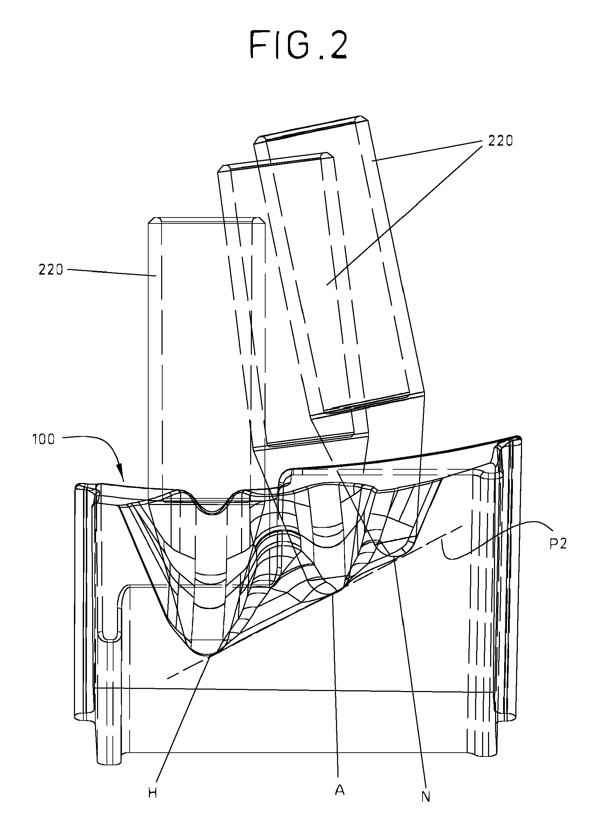

As shown in figures 4, 5 and 6 of the drawings, the first shifting path P1 of the gearshift pattern 100 is defined by a line extending from the reverse gearshift position R to the drive gearshift position D. The second shifting path P2 of the gearshift pattern 100 is defined by a line extending from a stable gearshift position H to the neutral gearshift position N. The second shifting path P2 can be seen also in figures 2 and 3 of the drawings.

The stable gearshift position H is also referred to as home or idle gearshift position and it is a gearshift position into which the selector 220 automatically returns after it has been moved to any of the above mentioned gearshift positions P, R, N, D, M+, M-. For this reason, the present gearshift pattern 100 is applicable in general to the so-called monostable shift by wire gearshift devices.

Within the meaning of the present disclosure, the shifting paths P1, P2 refer to the travel that can be performed by the selector 220 according to the pattern 100 formed on the contoured surface 250. A number of constraints can be imposed by the control unit or other control means to limit certain gearshift selections for safety reasons, such as, for example, selecting R gearshift position from D gearshift position directly or vice versa. Any of the gearshift positions in the pattern 100 can be selected without the user being forced to move the selector 220 first into the stable gearshift position H. Usually only when the selector 220 is released it automatically goes to the stable gearshift position H. Restrictions could be for example as follows: when the user goes directly from D to R gearshift position without first going into the stable position H, this might be interpreted by the control unit as the user actually wanted to be still in the D gearshift position and therefore the transmission remains in the D gearshift position; in other cases, this might be interpreted by the control unit as the user in fact wanted to select the R gearshift position and therefore the transmission is driven into the R gearshift position. However, in general, in cases where a gearshift position is selected without first going into the stable position H it is usually preferred that the neutral gearshift position N is selected by the control unit for safety reasons.

The neutral gearshift position N in the gearshift pattern 100 shown in figures 4 and 5 is located out of the first shifting path P1 between the reverse and drive gearshift positions R, D. Having the neutral gearshift position N in this specific location, accidental selection of the neutral gearshift position N when the selector 220 is moved along the first shifting path P1 of the pattern 100 is advantageously prevented. This allows risks during driving to be reduced or even eliminated even though the user remains too much time at the neutral gearshift position N when trying to select the R or D gearshift position.

In the specific examples shown in figures 4 and 5 of the drawings, the second shifting path P2 comprises two different travels R1, R2. A first travel R1 is defined in the second shifting path P2 from the stable gearshift position H to an intersection point A between the first and the second shifting paths P1, P2. A second travel R2 is defined in the second shifting path P2 from the intersection point A between the first and the second shifting paths P1, P2 and the neutral gearshift position N.

The first and the second travels R1, R2 of the second shifting path P2 are different from each other in terms of the force required for moving the selector 220 along both travels R1, R2, that is, for moving the selector 220 either between stable gearshift position H and intersection point A, or between intersection point A and the neutral gearshift position N. Other different features than the force could be used such that the user is aware of the travel R1 or R2 that is being travelled by the selector 220 along the second shifting path P2. This allows the user to know whether the selector 220 is being moved or not into the neutral gearshift position N.

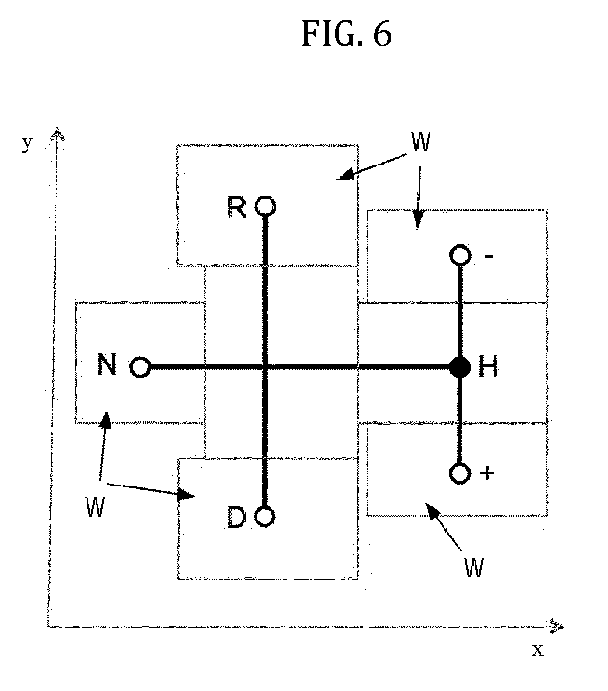

In some examples, the present gearshift device 200 may be provided with an absolute continuous sensor device (not shown) for detecting the position of the selector 220. According to the graph in figure 6, the absolute continuous sensor device may be configured in a way that configurable windows or areas W for recognition of stable and unstable positions are defined. Specifically, areas W are defined around each position R, N, D, H, A, M+, M- in which the selector 220 can be moved according to lines x, y such that at all times the position of the selector 220 is known. Thus, as the selector 220 is positioned within one specific area W, a specific position is recognized by the control unit. When the selector 220 is moved by the user from said specific position to a different position, a gearshift signal is sent to the control unit to drive the vehicle transmission accordingly.

When the user moves the selector 220 from the stable gearshift position H to select the drive gearshift position D, the selector 220 moves along the first travel R1 of the second shifting path P2, entering the window W corresponding to the area around the intersection point A. As a result, a signal may be sent to the control unit such that the control unit identifies that the selector 220 is in the surroundings of the intersection point A. This signal may be omitted as it does not correspond to a gearshift position. The user then continues moving the selector 220 past the intersection point A along the first shifting path P1 to the desired drive gearshift position D. Consequently, the selector 220 exits the window W corresponding to the surroundings of the intersection point A and eventually enters the window W corresponding to the surroundings of the drive gearshift position D, generating the corresponding gearshift signal. Typically, the user then releases the selector 220 such that it automatically returns to the stable gearshift position H, causing the selector 220 to enter the window W corresponding to the surroundings of the stable gearshift position H.

Although only a number of particular embodiments and examples of the present monostable shift by wire gearshift device have been disclosed herein, it will be understood by those skilled in the art that other alternative examples and/or uses and obvious modifications and equivalents thereof are possible. The scope of the present disclosure should not be limited by particular examples, but should be determined only by a fair reading of the claims that follow. The present disclosure thus covers all possible combinations of the particular examples described herein.

Reference signs related to drawings and placed in parentheses in a claim, are solely for attempting to increase the intelligibility of the claim, and shall not be construed as limiting the scope of the claim.

## Claims

1. Monostable shift by wire gearshift device (200), comprising a selector (220) that is movable along at least a first shifting path (P1) and a second shifting path (P2) for selecting gearshift positions,
the first shifting path (P1) extending from an unstable reverse gearshift position (R), for engaging a reverse gear, to an unstable drive gearshift position (D), for engaging a forward gear,
a stable gearshift position (H) being defined into which the selector (220) automatically returns after it has been moved for selecting a gearshift position,
the second shifting path (P2) extending from the stable gearshift position (H) to an unstable neutral gearshift position (N) for the interruption of torque transmission,
where the unstable neutral gearshift position (N) is defined located out of said first shifting path (P1), and where the second shifting path (P2) comprises at least a first travel (R1) and a second travel (R2) that are different from each other such that the user is capable of recognizing the one along which the selector (220) is being moved.

2. Monostable shift by wire gearshift device (200) according to claim 1, where the first travel (R1) of the second shifting path (P2) is defined from the stable gearshift position (H) to an unstable intersection point (A) between the second shifting path (P2) and the first shifting path (P1), and where the second travel (R2) of the second shifting path (P2) is defined from said unstable intersection point (A) and the unstable neutral gearshift position (N).

3. Monostable shift by wire gearshift device (200) according to claim 1 or 2, configured such that the force required for moving the selector (220) along the first travel (R1) of the second shifting path (P2) is different from that required for moving the selector (220) along the second travel (R2) of the second shifting path (P2).

4. Monostable shift by wire gearshift device (200) according to any of the preceding claims, where the second shifting path (P2) is linear.

5. Monostable shift by wire gearshift device (200) according to any of the preceding claims, where the first shifting path (P1) is linear.

6. Monostable shift by wire gearshift device (200) according to any of the preceding claims, where it includes an absolute continuous sensor device for detecting the position of the selector (220).

7. Monostable shift by wire gearshift device (200) according to claim 6, where the absolute continuous sensor device is configured such that an area (W) is defined around at least each selectable gearshift position in which the selector (220) can be moved such that no other different gearshift position is selected.

8. Monostable shift by wire gearshift device (200) according to claim 7, where the areas (W) of the selectable gearshift positions are defined such that, as the selector (220) is moved from one gearshift position to a different gearshift position, a gearshift signal is sent to a control unit to drive a vehicle transmission accordingly.
